# EUROPEAN PATENT APPLICATION

(11) **EP 4 451 126 A1**
(43) Date of publication of application: **23.10.2024**
(21) Application number: 23203645.9
(22) Date of filing: 13.10.2023
(51) Int. Cl.: G06F 9/455, H04L 61/2546

(54) **TECHNIQUES FOR COOPERATIVE HOST/GUEST NETWORKING**

(30) Priority: 21.04.2023 US 202318305048
(71) Applicant: Red Hat, Inc., Raleigh, NC 27601 (US)
(72) Inventor: TSIRKIN, Michael, Raleigh (US)
(74) Representative: Murgitroyd & Company

(57) **Abstract**

A network address is allocated for a guest virtual machine (VM) of a computing device by the host operating system. The network address is externally accessible from an external network coupled to the computing device. An indication is received , from the guest VM, that the guest VM is using the network address. The network address as used by the guest VM matches the network address as exposed by the host operating system on the external network. A network transmission, from the external network, is received that is directed to the network address. Responsive to the indication that the guest VM is using the network address, the network transmission is transferred to the guest VM.

## Description

### TECHNICAL FIELD

Aspects of the present disclosure relate to networking in virtualized environments and, more particularly, to networking in virtualized environments utilizing cooperative networking between the host and the guest operating systems.

### BACKGROUND

A hypervisor (or virtual machine monitor, also known as a host) allows multiple virtual machines (e.g., operating systems, also known as guests) to operate on a host computer or a computer network at the same time. The hypervisor enables the multiple virtual machines to share hardware resources while isolating the multiple virtual machines from each other. Cloud computing, data centers, and personal computers may all take advantage of these characteristics of hypervisors.

In some configurations, the guests may employ networking, which may be shared with the physical network interfaces of the host. For example, the host may control a physical network interface (e.g., a network card) that is shared among multiple guests. To provide networking functionality to the guests, the host may expose a virtual network interface to the operating systems of the guests. Network drivers executing on the guests may interact with the virtual network interface, respectively, in a similar manner to a physical network interface so as to implement networking access on the guest.

### SUMMARY OF THE DISCLOSURE

According to a first aspect of the present disclosure there is provided a method comprising:
allocating, by a host operating system of a computing device, a network address for a guest virtual machine (VM) of the computing device, wherein the network address is externally accessible from an external network coupled to the computing device;
receiving, from the guest VM, an indication that the guest VM is using the network address, wherein the network address as used by the guest VM matches the network address as exposed by the host operating system on the external network;
receiving, from the external network, a network transmission directed to the network address; and
responsive to the indication that the guest VM is using the network address, transferring, by a processing device, the network transmission to the guest VM.

The method further comprise: sending, by the host operating system, a list of a plurality of free addresses to the guest VM, the list of the plurality of free addresses comprising the network address. The network transmission may be a first network transmission, and wherein the method further comprises: receiving an indication that the guest VM is no longer utilizing the network address; receiving, from the external network, a second network transmission directed to the network address; and responsive to the indication that the guest VM is no longer utilizing the network address, discarding, by the processing device, the second network transmission. The method may further comprise: allocating, by the host operating system, a plurality of network addresses to the guest VM, the plurality of network addresses comprising the network address, each of the plurality of network addresses configured to be externally accessible from an external network coupled to the computing device; and sending, by the host operating system, the plurality of network addresses to the guest VM. The plurality of network addresses may be a first plurality of network addresses, and wherein the method further comprises: receiving a request from the guest VM for additional network addresses; allocating, by the host operating system, a second plurality of network addresses to the guest VM, each of the second plurality of network addresses configured to be externally accessible from an external network coupled to the computing device; and sending, by the host operating system, the second plurality of network addresses to the guest VM. The method may further comprise: in response to receiving the request from the guest VM for the additional network addresses, comparing a number of network addresses allocated to the guest VM to an address threshold, wherein the allocating, by the host operating system, the second plurality of network addresses to the guest VM is performed in response to determining that the number of network addresses allocated to the guest VM does not exceed the address threshold. The network address may comprise a port number, and wherein the port number as utilized by the guest VM matches the port number as exposed by the host operating system on the external network.

According to a second aspect of the present disclosure there is provided a system comprising:a memory; and
a processing device, operatively coupled to the memory, to:
   allocate, by a host operating system of a computing device, a network address for a guest virtual machine (VM) of the computing device, wherein the network address is externally accessible from an external network coupled to the computing device;
receive, from the guest VM, an indication that the guest VM is using the network address, wherein the network address as used by the guest VM matches the network address as exposed by the host operating system on the external network;
receive, from the external network, a network transmission directed to the network address; and
responsive to the indication that the guest VM is using the network address, transfer the network transmission to the guest VM.

The processing device may be further to: send, by the host operating system, a list of a plurality of free addresses to the guest VM, the list of the plurality of free addresses comprising the network address. The network transmission may be a first network transmission, and wherein the processing device is further to: receive an indication that the guest VM is no longer utilizing the network address; receive, from the external network, a second network transmission directed to the network address; and responsive to the indication that the guest VM is no longer utilizing the network address, discard the second network transmission. The processing device may be further to: allocate, by the host operating system, a plurality of network addresses to the guest VM, the plurality of network addresses comprising the network address, each of the plurality of network addresses configured to be externally accessible from an external network coupled to the computing device; and send, by the host operating system, the plurality of network addresses to the guest VM. The plurality of network addresses may be a first plurality of network addresses, and wherein the processing device may be further to: receive a request from the guest VM for additional network addresses; allocate, by the host operating system, a second plurality of network addresses to the guest VM, each of the second plurality of network addresses configured to be externally accessible from an external network coupled to the computing device; and send, by the host operating system, the second plurality of network addresses to the guest VM. The processing device may be further to: in response to receiving the request from the guest VM for the additional network addresses, compare a number of network addresses allocated to the guest VM to an address threshold, wherein the processing device is to allocate, by the host operating system, the second plurality of network addresses to the guest VM in response to determining that the number of network addresses allocated to the guest VM does not exceed the address threshold. The network address may comprise a port number, and wherein the port number as utilized by the guest VM matches the port number as exposed by the host operating system on the external network.

According to a third aspect of the present disclosure there is provided a non-transitory computer-readable storage medium including instructions that, when executed by a processing device, cause the processing device to:
allocate, by a host operating system of a computing device, a network address for a guest virtual machine (VM) of the computing device, wherein the network address is externally accessible from an external network coupled to the computing device;
receive, from the guest VM, an indication that the guest VM is using the network address, wherein the network address as used by the guest VM matches the network address as exposed by the host operating system on the external network;
receive, from the external network, a network transmission directed to the network address; and
responsive to the indication that the guest VM is using the network address, transfer, by the processing device, the network transmission to the guest VM.

The processing device may be further to: send, by the host operating system, a list of a plurality of free addresses to the guest VM, the list of the plurality of free addresses comprising the network address. The network transmission may be a first network transmission, and wherein the processing device may be further to: receive an indication that the guest VM is no longer utilizing the network address; receive, from the external network, a second network transmission directed to the network address; and responsive to the indication that the guest VM is no longer utilizing the network address, discard the second network transmission. The processing device may be further to: allocate, by the host operating system, a plurality of network addresses to the guest VM, the plurality of network addresses comprising the network address, each of the plurality of network addresses configured to be externally accessible from an external network coupled to the computing device; and send, by the host operating system, the plurality of network addresses to the guest VM. The plurality of network addresses may be a first plurality of network addresses, and wherein the processing device may be further to: receive a request from the guest VM for additional network addresses; allocate, by the host operating system, a second plurality of network addresses to the guest VM, each of the second plurality of network addresses configured to be externally accessible from an external network coupled to the computing device; and send, by the host operating system, the second plurality of network addresses to the guest VM. The network address comprises a port number, and wherein the port number as utilized by the guest VM matches the port number as exposed by the host operating system on the external network.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the scope of the described embodiments.
FIG. 1 is a schematic block diagram that illustrates an example system, according to some embodiments of the present disclosure.
FIG. 2A is a block diagram that illustrates an example guest VM executing within a computing device, in accordance with some embodiments of the present disclosure.
FIG. 2B is a block diagram that illustrates an example container executing within a guest VM on a computing device, in accordance with some embodiments of the present disclosure.
FIG. 3A is a flow diagram illustrating communications between a host network driver, a guest network driver, and an application, in accordance with some embodiments of the present disclosure.
FIG. 3B is a flow diagram illustrating a method of operating the host network driver of FIG. 3A, in accordance with some embodiments of the present disclosure.
FIG. 4A is a flow diagram illustrating communications between a host network driver, a guest network driver, and an application, in accordance with some embodiments of the present disclosure.
FIG. 4B is a flow diagram illustrating a method of operating the host network driver of FIG. 4A, in accordance with some embodiments of the present disclosure.
FIG. 5A is a flow diagram illustrating communications between a host network driver, a guest network driver, and an application, in accordance with some embodiments of the present disclosure.
FIG. 5B is a flow diagram illustrating a method of operating the host network driver of FIG. 4A, in accordance with some embodiments of the present disclosure.
FIG. 6 is a schematic block diagram that illustrates an example system, according to some embodiments of the present disclosure.
FIG. 7 is a flow diagram of a method of performing cooperative networking between a host and a guest in a computing device, according to some embodiments of the present disclosure.
FIG. 8 is a component diagram of an example of a device architecture, according to some embodiments of the disclosure.
FIG. 9 is a flow diagram of a method of performing cooperative networking between a host and a guest in a computing device, according to some embodiments of the present disclosure.
FIG. 10 is a block diagram that illustrates an example system, according to some embodiments of the present disclosure.

### DETAILED DESCRIPTION

In computer systems supporting development and execution of application services, guest virtual machines and/or containers may be used. As an example, a guest virtual machine ("VM") may be a simulation of an actual physical computer system utilizing a hypervisor to allocate physical resources to the VM. As another example, guest containers are active components executing on an operating system of a host system that provide an environment for applications to run, while being isolated from other components of the host system. Multiple containers may execute on a single operating system kernel and share the resources of the hardware upon which the operating system is running. In some environments, as will be described further herein, container implementations may be augmented with guest VMs, such as in KATA^{™} container implementations.

While utilizing virtualization, guests VMs may be configured with virtual networking. Virtual networking in a guest VM refers to the process of creating and managing a virtual network within a virtualized environment. This may include setting up and configuring a virtual network adapter, a virtual switch, and/or a virtual router, as well as defining network topologies and security policies for guest VMs running on the host system. Virtual networking allows multiple guest VMs to access resources on networks external to the host system as well as other guest VMs running on the same host system.

One approach to virtual networking is to create a virtual switch, which acts as a bridge between the virtual network adapters in each guest VM and the physical network adapter in the host system. This allows guest VMs to connect to the physical network, while also enabling communication between guest VMs on the same virtual switch. In some situations, the virtual switch may utilize different internal network addresses for the guest VMs than for the external network. For example, the host system may utilize network address translation (NAT) to translate an internal address utilized by a guest VM to an externally-visible network address, which may be different from the internal address.

The guest address concept may extend to port mapping as well. A network port is a virtual communication endpoint that is used to identify a specific application or service running on a networked device. In computer networking, a port is a logical construct that is associated with a unique number, called a port number, which may be used by network protocols to identify a particular process or service on the networked device. When the networked device sends data to another device, it may include the destination port number along with the internet protocol (IP) address of the target device. This allows the receiving device to route the data to the appropriate application or service running on that device. Ports that are exposed in guest VMs may be translated by the host system as part of translating the address. For example, an application on a guest VM may be listening on a first port (e.g., port X), but the host system may expose a different port (e.g., port Y) for traffic intended for port X of the guest VM. The host system will perform translation on traffic received at port Y and provide it to the guest VM at port X of the guest VM.

The translation of addresses, including the modifications of port numbers, may cause a number of issues. For example, systems external to the host system (e.g., systems that may be communicating with the guest VM) may associate the application executing on the guest VM with a different IP address and/or a different port number than what the guest VM sees for itself. For example, an application on the guest VM may indicate that it is listening on port 80, but the external application may need to address port 8080 on the host system to connect to port 80 on the guest VM. This difference between the externally-visible address of the guest VM and the internally-aware address as seen by the guest VM can cause configuration issues, as an application executing on the guest VM may be unable to determine an appropriate network address to provide to external clients.

Accommodating for the modifications made to the address of the guest VM may increase an amount of configuration that takes place between the host system, the guest VM, and the external system. For example, some solutions may utilize pre-configuration so that the translation that is made will be known in advance. Other solutions may utilize translations, but may require that these translation be put into place prior to any applications being executed on the guest VM. Such solutions may limit an ability of the host system to be flexible to changing applications and/or guest VMs that may be present.

The present disclosure addresses the above-noted and other deficiencies by providing a paravirtualized network driver for the guest VM that is capable of communicating with the host system to allocate external addresses to be provided to the guest VM. Utilizing the cooperative driver, the host system may be able to allocate an address for the guest VM that is both internally and externally consistent. Thus, the address (e.g., an IP address and/or port) of an application executing on a guest VM will be the same both internally to the guest VM as well as externally to the host system. The host system may be responsible for tracking which addresses are used for which guest VMs and providing traffic directed to those addresses appropriately. In addition, some embodiments of the present disclosure may allow for address allocation for a guest-based application to occur dynamically, so that pre-configuration is not necessary.

Embodiments of the present disclosure may provide a technological solution that reduces an amount of configuration utilized by a guest VM. Some embodiments of the present disclosure may provide consistency between the internal address of the guest VM and its external address that may reduce an amount of translation needed between the different addresses. For example, by having a port to which an application is connected on a guest VM be the same as the externally-visible port, it may be easier for external applications to communicate with the application on the guest VM. Some embodiments of the present disclosure may improve the operation of a computer by reducing an amount of resources necessary to configure executing guest VMs while maintaining or increasing a flexibility of the execution of services on the guest VMs.

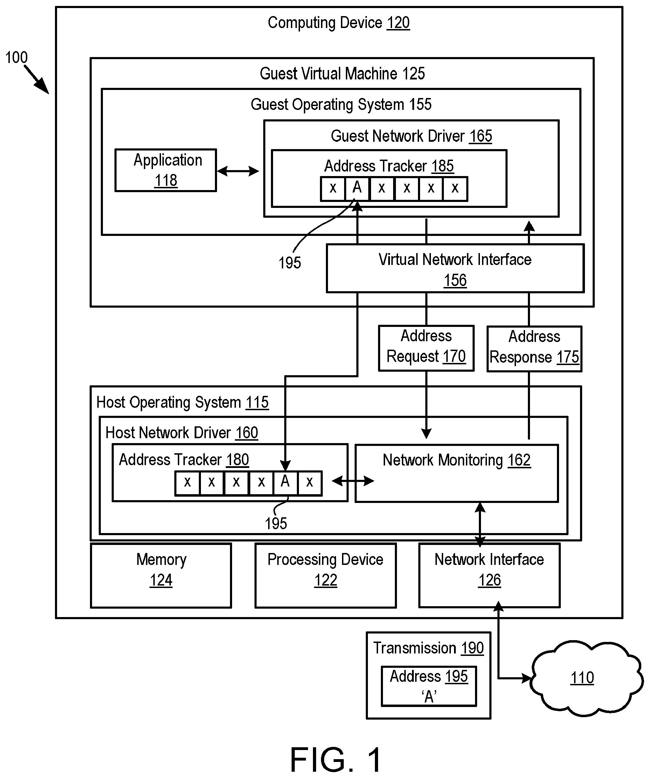

FIG. 1 is a schematic block diagram that illustrates an example system 100, according to some embodiments of the present disclosure. FIG. 1 and the other figures may use like reference numerals to identify like elements. A letter after a reference numeral, such as "130A," indicates that the text refers specifically to the element having that particular reference numeral. A reference numeral in the text without a following letter, such as "130," refers to any or all of the elements in the figures bearing that reference numeral.

As illustrated in FIG. 1, the system 100 may include a computing device 120. The computing device 120 may include hardware such as processing device 122 (e.g., processors, central processing units (CPUs), etc.), memory 124 (e.g., random access memory (RAM), etc.), a network interface 126 (e.g., a network card supporting, for example, the ethernet protocol), storage devices (e.g., hard-disk drive (HDD), solid-state drive (SSD), etc.), and other hardware devices (e.g., sound card, video card, etc.).

Processing device 122 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 122 may also include one or more special-purpose processing devices such as an application specific integrated circuit (ASIC), a field programmable gate array (FPGA), a digital signal processor (DSP), network processor, or the like.

Memory 124 may include volatile memory devices (e.g., random access memory (RAM)), non-volatile memory devices (e.g., flash memory) and/or other types of memory devices. In certain implementations, memory 124 may be non-uniform access (NUMA), such that memory access time depends on the memory location relative to processing device 122. In some embodiments, memory 124 may be a persistent storage that is capable of storing data. A persistent storage may be a local storage unit or a remote storage unit. Persistent storage may be a magnetic storage unit, optical storage unit, solid state storage unit, electronic storage units (main memory), or similar storage unit. Persistent storage may also be a monolithic/single device or a distributed set of devices. Memory 124 may be configured for long-term storage of data and may retain data between power on/off cycles of the computing device 120.

In some embodiments, the computing device 120 may be directly or indirectly communicatively coupled to a network 110 through the network interface 126. For example, the computing device 120 may be coupled to (e.g., may be operatively coupled, communicatively coupled, may communicate data/messages with) other computing devices via network 110. Network 110 may be a public network (e.g., the internet), a private network (e.g., a local area network (LAN) or wide area network (WAN)), or a combination thereof. In one embodiment, network 110 may include a wired or a wireless infrastructure, which may be provided by one or more wireless communications systems, such as a WIFI^{®} hotspot connected with the network 110 and/or a wireless carrier system that can be implemented using various data processing equipment, communication towers (e.g., cell towers), etc. The network 110 may carry communications (e.g., data, message, packets, frames, etc.) to and from the computing device 120.

The computing device 120 may comprise any suitable type of computing device or machine that has a programmable processor including, for example, server computers, desktop computers, laptop computers, tablet computers, smartphones, set-top boxes, etc. In some examples, the computing device 120 may comprise a single machine or may include multiple interconnected machines (e.g., multiple servers configured in a cluster).

The computing device 120 may execute an operating system 115 (also referred to herein as a "host operating system"). Host operating system (OS) 115 may be software to provide an interface between the computing hardware (e.g., processing device 122 and/or network interface 126) and applications running on the host OS 115. Host OS 115 may include an OS kernel and a user space supporting the execution of one or more guest virtual machines 125. The host OS 115 may include several operating system functionalities, including but not limited to process management, hardware interfaces, access control and the like. Examples of host operating systems 115 include WINDOWS, LINUX, ANDROID, IOS^{™}, and MACOS^{™}.

The guest VM 125 may execute a guest OS 155. Guest OS 155 may be software to provide an interface between the virtualized computing hardware (e.g., a virtual CPU, virtual network device, etc.) provided by the host OS 115 and an application 118 running on the guest OS 155. The guest OS 155 may include several operating system functionalities, including but not limited to process management, hardware interfaces, access control and the like. Examples of guest operating systems 155 include WINDOWS, LINUX, ANDROID, IOS^{™}, and MACOS^{™}. In some embodiments, the guest OS 155 may be different from the host OS 115.

Though only a single guest VM 125 is illustrated in FIG. 1, this is only for ease of description, and is not intended to limit the embodiments of the present disclosure. In some embodiments, a plurality of guest VMs 125 may be executing on computing device 120.

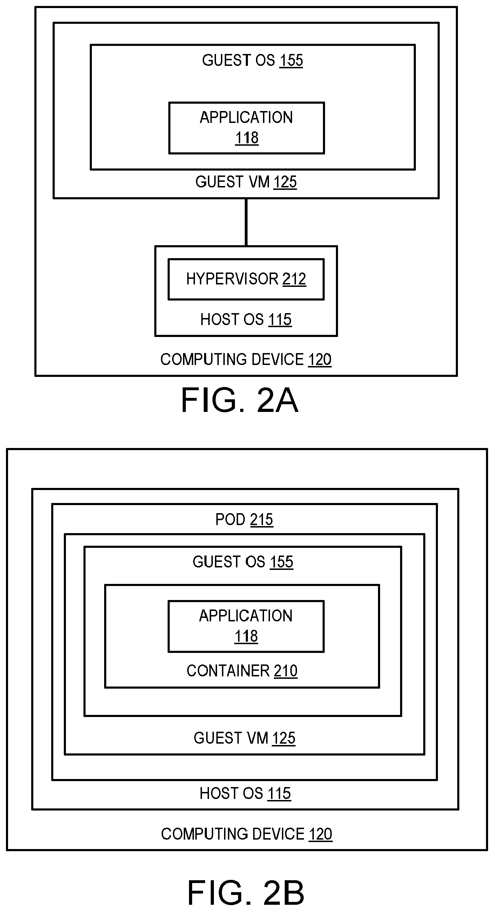

The guest VM 125 may be provided in a plurality of different modalities. For example, in some embodiments, the guest VM 125 may be provided utilizing a hypervisor. In some embodiments, the guest VM 125 may utilize containers. FIG. 2A is a block diagram that illustrates an example guest VM 125 executing within a computing device 120, in accordance with some embodiments of the present disclosure. FIG. 2B is a block diagram that illustrates an example container 210 executing within a guest VM 125 on a computing device 120, in accordance with some embodiments of the present disclosure. FIGS. 2A and 2B contrast the use of a guest VM 125 within different execution environments, in accordance with the system 100 of FIG. 1.

Referring to FIGS. 1 and 2A, in a VM-based infrastructure, a computing device 120 may include hardware (e.g., processing devices 122, memory 124, network interface 126 storage devices, other devices, etc.) and a host OS 115. As discussed above, one type of a virtual environment may be a guest VM 125 executing on the computing device 120. In an embodiment, the guest VM 125 may be a software implementation of a machine (e.g., a software implementation of a computing device) that includes its own operating system (referred to as guest OS 155), including its own kernel, and executes software programs such as application 118. Guest VM 125 may be, for example, a hardware emulation, a full virtualization, a para-virtualization, and an operating system-level virtualization VM.

Computing device 120 may include a hypervisor 212, which may also be known as a virtual machine monitor (VMM). In the example shown, the hypervisor 212 may be a component of the host OS 115. In another example, hypervisor 212 may run on top of a host OS 115, or may run directly on host hardware without the use of a host OS 115. Hypervisor 212 may manage system resources, including access to physical processing devices (e.g., processing devices 122, network interfaces 126, etc.), physical memory (e.g., memory 124), storage devices (e.g., HDDs, SSDs), and/or other devices (e.g., sound cards, video cards, etc.). The hypervisor 212, though typically implemented in software, may emulate and export a bare machine interface to higher level software in the form of virtual processors and guest memory. Higher level software may comprise a standard or real-time operating system (OS), may be a highly stripped down operating environment with limited operating system functionality, may not include traditional OS facilities, etc. Hypervisor 212 may present other software (i.e., "guest" software) the abstraction of one or more virtual machines (VMs) that provide the same or different abstractions to various guest software (e.g., guest operating system 155, guest application 118).

The guest VM 125 may execute guest software that uses an underlying emulation of the physical resources (e.g., virtual processors and guest memory). As illustrated in FIGS. 1 and 2A, the guest VM 125 may execute the application 118.

Referring to FIGS. 1 and 2B, in a container-based infrastructure, a computing device 120 may include hardware (e.g., processing devices 122, memory 124, network interface 126 storage devices, other devices, etc.) and the host OS 115. The embodiment of FIG. 2B may incorporate a container 210 in a guest VM 125.

A container 210 may be scheduled to execute on the host OS 115 of a computing device 120 by a container orchestration platform. One example of a container orchestration platform is the Red Hat^{™} OpenShift^{™} platform built around Kubernetes. Orchestrator platforms may employ cluster infrastructures. Cluster infrastructures may include a number of applications 118 providing services (e.g., applications provided using containers and/or VMs, also referred to as the data plane) and a control plane that manages the execution and/or distribution of the workloads on one or more compute nodes. In a cluster infrastructure, the compute nodes, which may include physical hosts (e.g., computing device 120), processors on a physical host, or virtual machines, may be configured as resources for execution of the applications 118 using the containers 210 of the cluster. The orchestrator platform may move the application 118 between and among the compute nodes as part of managing the execution of the workload. In some embodiments, the orchestration engine may manage pods 215. A pod 215 may refer to the most basic (smallest) compute unit that can be defined, deployed, and managed by the control plane (e.g., one or more containers deployed together on a single host).

In the example of FIG. 2B, it is assumed that the container 210 has been scheduled as part of pod 215 to execute an application 118 on computing device 120 as a compute node. In some embodiments, the pod 215 may be configured to contain the guest VM 125. In one embodiment, the guest VM 125 may be a software implementation of a machine (e.g., a software implementation of a computing device) that includes its own operating system (referred to as guest OS 155), including its own kernel, and executes software programs such as application 118.

Guest VM 125 may execute guest software that uses an underlying emulation of the physical resources (e.g., virtual processors and guest memory). As illustrated in FIG. 2B, the guest VM 125 may include a container 210 that may execute the application 118. In some embodiments, the computing device 120 may expose resources such as a real or emulated processor(s), real or emulated memory, and/or real or emulated storage of the computing device 120 by way of an emulator.

In some embodiments, the pod 215 may be configured to receive the application 118, including a configuration for the application 118. The pod 215 may be configured to generate the guest VM 125, with its associated guest OS 155, and execute the application 118 within a container 210 within the guest VM 125. The guest OS 155 may be and/or include a reduced OS kernel and OS infrastructure. This may allow the guest OS 155 to launch more quickly than traditional VMs, while also using fewer system resources. In some embodiments, the embodiment illustrated in FIG. 2B may be based on a KATA^{™} Container implementation. Kata Containers are an open source project for running a containerized VMs which utilizes a container runtime interface (CRI) to implement a reduced VM 125 to execute the container 210.

FIGS. 2A and 2B illustrate examples of different ways that a guest VM 125 may execute application 118 on a computing device 120. In both FIG. 2A and FIG. 2B, the guest VM 125 may include a guest OS 155, which may be configured to execute a guest network driver 165, as will be described in further detail herein. The examples of FIGS. 2A and 2B are not intended to limit the embodiments of the present disclosure. Other configurations of the guest VM 125, and its associated application 118, may be possible without deviating from the scope of the present disclosure.

Referring back to FIG. 1, embodiments of the present disclosure may allow for an address 195 (also referred to herein as a network address 195) to be requested for an application 118 from a guest network driver 165 of the guest OS 155. The guest network driver 165 may be configured to control and/or be associated with a virtual network interface 156 of the guest VM 125. The virtual network interface 156 may be a simulated network interface that simulates network traffic and/or network transmissions for the guest VM 125.

The address 195 may be provided to the guest network driver 165 by a host network driver 160 of the host OS 115. In some embodiments, the guest network driver 165 may be configured to associate the address 195 provided from the host network driver 160 with the virtual network interface 156. Once provided by the host network driver 160, the host network driver 160 may continue to track any received traffic directed to the provided address 195, and direct such traffic to the guest network driver 165 for communication to the application 118. The provided address 195 as utilized by the application 118 may be a network address that is identical to an address 195 that is exposed externally to the computing device 120. As used herein, an externally exposed address 195 refers to an address 195, such as an IP address and/or port, that is identified with the computing device 120 on the network 110 and is addressable by other entities and/or nodes of the network 110. An externally-visible address 195 may be differentiated from an internally-visible address in that the internally visible address may be utilized for communication within the computing device 120 (e.g., between different guest VMs 125 of the computing device 120) but may not be suited for addressing within the network 110 that is external to the computing device 120.

In some embodiments, the guest network driver 165 may be configured to receive a request for an address 195 from application 118. The application 118 may be, for example, a server or other computer application configured to interact with network 110. For example, in some embodiments, the application 118 may be a network configuration application 118 that is configured to establish a network address for the guest operating system 155. The address 195 requested by the application 118 may be, or include, an IP address and/or a port number. The address 195 may be requested, for example, in an operation associated with the configuration of the virtual network interface 156.

In some embodiments, in response to the address request from the application 118, the guest network driver 165 may be configured to transmit an address request 170 to the host network driver 160. In response to the address request 170, the host network driver 160 may allocate one or more addresses 195 for the guest OS 155. The one or more addresses 195 may be transmitted to the guest network driver 165 by an address response 175. The guest network driver 165 may then inform or otherwise update the application 118 to utilize the one or more addresses 195. In some embodiments, the guest network driver 165 may be configured to apply and/or associate the received address 195 with the virtual network interface 156.

Once allocated, both the guest network driver 165 and the host network driver 160 may track the allocated addresses 195. In some embodiments, the guest network driver 165 may maintain an address tracker store 185 to store addresses 195 received from the host network driver 160. In some embodiments, the host network driver 160 may maintain an address tracker store 180 to store addresses 195 provided to the guest network driver 165.

The host network driver 160 may be configured to monitor incoming network traffic for packets directed to one of the allocated addresses 195. For example, a network monitoring engine 162 may receive, at network interface 126, a transmission 190 directed to one of the addresses 195. (Address 'A' in the example of FIG. 1.) Upon receipt of the transmission 190, the network monitoring engine 162 may analyze the address 195 to which the transmission 190 is directed. For example, the network monitoring engine 162 may scan the address tracker store 180 to determine if the address 195 of the transmission 190 is one of the address 195 that has been allocated for the guest network driver 165. In response to determining that the address 195 has been allocated and is in-use by the guest VM 125, the network monitoring engine 162 may forward the transmission 190 to the guest network driver 165, which may further forward the transmission 190 to the application 118. For example, the host network driver 160 may provide the transmission 190 to the virtual network interface 156. In response to determining that the that the address 195 has not been allocated and/or is not in use by the guest VM 125 (e.g., is not within the address tracker store 180), the network monitoring engine 162 may discard the transmission 190.

Referring to the example of FIG. 1, in response to a request from the guest network driver 165, an address 'A' may be allocated for the guest network driver 165. As an example, the address 'A' may refer to an address of the format "10.10.10.15," "port 80," and/or "10.10.10.15:80" as examples only. As part of the allocation, the guest network driver 165 may provide the address 'A' (e.g., 10.10.10.15:80) to the application 118 and establish the address 'A' as the address for the virtual network interface 156 of the guest VM 125. The application 118 may understand this address 195 to be the address of the virtual network interface 156 of the guest operating system 155. Subsequent to the allocation, the network monitoring engine 162 may receive a transmission 190 at the external (physical) network interface 126 that is directed to an address 'A' (which may be an IP address and/or a port) from network 110. The network monitoring engine 162 may determine that the address 'A' has been allocated to the guest network driver 165. The network monitoring engine 162 may forward the transmission 190 to the guest network driver 165 for forwarding to the application 118 as a received network transmission.

By allocating addresses 195 for the guest network driver 165, the host network driver 160 may allow the allocated addresses 195 to be associated with network packets that are transmitted (e.g., broadcast) and/or received via network interface 126. Moreover, by transmitting the address 195 to the guest network driver 165, the application 118 may be made aware of the address 195 (e.g., as having been received by virtual network interface 156), such that the application's notion of the address 195 mirrors (e.g., is the same as) that of the external address 195. Stated another way, the address 195 as seen by the guest operating system 155 (and application 118 executing within it) and associated with the virtual network interface 156 will be identical to an address 195 visible to the network 110 as being associated with the external network interface 126.

Though FIG. 1 illustrates examples of a request 170 and response 175 between the guest network driver 165 and the host network driver 160, these are merely examples and are not intended to limit the embodiments of the present disclosure. In some embodiments, the host OS 115 may provide the virtual network interface 156 that is visible to the guest OS 155. The guest OS 155 may be configured to allocate guest network driver 165 to this virtual network interface 156. The various calls and interface provided for control of the virtual network interface 156 may provide the information exchange for the address request 170 and/or the address response 175 described herein.

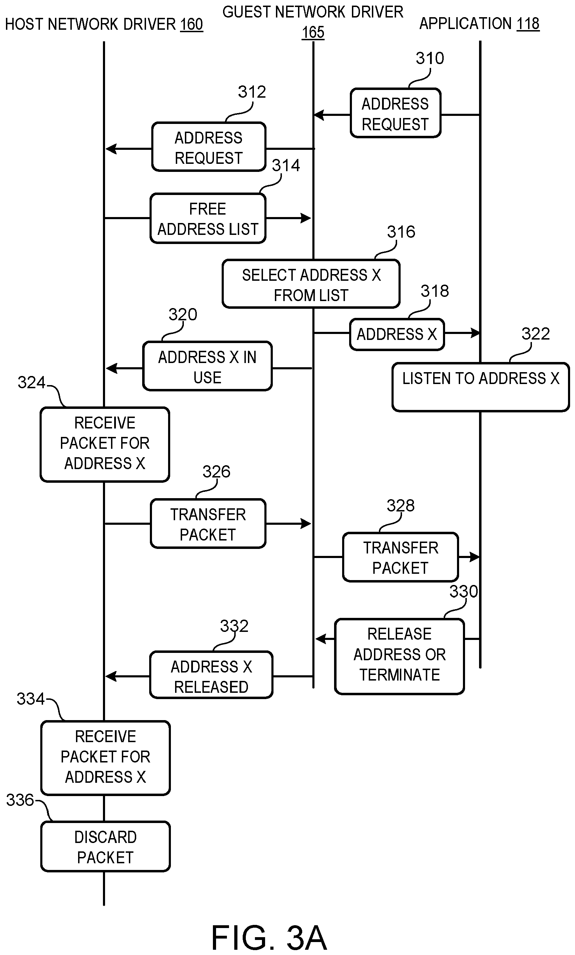

FIG. 3A is a flow diagram illustrating communications between a host network driver 160, a guest network driver 165, and an application 118, in accordance with some embodiments of the present disclosure. A description of elements of FIG. 3A that have been previously described will be omitted for brevity. The operations of FIG. 3A may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the operations of FIG. 3A may be performed by a computing device (e.g., computing device 120 illustrated in FIG. 1).

Referring to FIGS. 1 and 3A, at operation 310, application 118 may request 310 an address 195 from the guest network driver 165. In some embodiments, the application 118 may be a network configuration application and/or a server application.

At operation 312, the guest network driver 165 may request 312 an address from the host network driver 160. The request 312 may be similar to the address request 170 illustrated and described with respect to FIG. 1.

At operation 314, the host network driver 160 may transmit 314 a free address list to the guest network driver 165. The free address list may be a list containing one or more addresses 195 that are available to the guest network driver 165. The address 195 may be an IP address and/or a port number. The free address list may represent addresses 195 that have not yet been allocated by the host network driver 160.

At operation 316, the guest network driver 165 may select an address 195 from the list provided by the host network driver 160. In the example of FIG. 3A, the address 195 that is selected is address 'X'. After selecting 316 the address 195, the guest network driver 165 may provide 318 the address 195 to the application 118. In some embodiments, the guest network driver 165 may configure a virtual network interface 156 with the address 195. In addition, the guest network driver 165 may indicate 320 to the host network driver 160 that the address 195 is in use. In some embodiments, in response to detecting that the address 195 is in use, the host network driver 160 may begin monitoring for transmissions 190 associated with the address 195 (e.g., address X).

The host network driver 160 may receive 324 a packet (e.g., from external network 110). As part of operation 324, the host network driver 160 may determine that the packet is allocated to the guest network driver 165. Responsive to determining that the address 195 is in use by the guest network driver 165, the host network driver 160 may transfer 326 the packet to the guest network driver 165. The guest network driver 165 may process the packet directed to the address 195, which may include transferring 328 the packet to the application 118.

The application 118 may release the address 195 and/or may terminate at operation 330. The guest network driver 165 may detect the release of the address 195 and/or termination of the application 118, and may transmit 332 an indication to the host network driver 160 that the address 195 is released.

Subsequent to the release of the address 195, the host network driver 160 may receive 334, a packet directed to the previously allocated address 195 ('X' in the example of FIG. 3A). The host network driver 160 may determine that the address 195 is no longer allocated (e.g., to the guest network driver 165). Responsive to determining that the address 195 is no longer allocated, the host network driver 160 may discard 336 the packet.

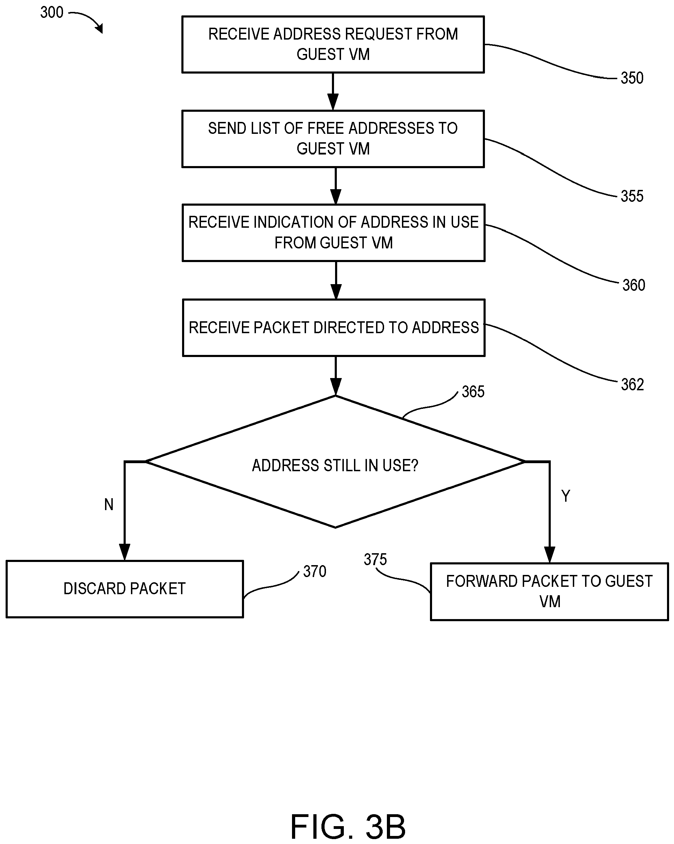

FIG. 3B is a flow diagram illustrating a method 300 of operating the host network driver 160 of FIG. 3A, in accordance with some embodiments of the present disclosure. A description of elements of FIG. 3B that have been previously described will be omitted for brevity. Method 300 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 300 may be performed by computing device 120 of at least FIG. 1.

With reference to FIG. 3B, method 300 illustrates example functions used by various embodiments. Although specific function blocks ("blocks") are disclosed in method 300, such blocks are examples. That is, embodiments are well suited to performing various other blocks or variations of the blocks recited in method 300. It is appreciated that the blocks in method 300 may be performed in an order different than presented, and that not all of the blocks in method 300 may be performed.

Referring to FIGS. 1 and 3B, at operation 350 an address request 170 may be received from a guest VM 125. For example, the address request 170 may be received from a guest network driver 165 of the guest VM 125.

In response to the address request 170, at operation 355, the host network driver 160 may transmit a list of free addresses to the guest VM 125. The free address list may be a list containing one or more addresses 195 that are available to the guest network driver 165. The address 195 may be an IP address and/or a port number. The free address list may represent addresses 195 that have not yet been allocated by the host network driver 160.

At operation 360, the host network driver 160 may receive, from the guest VM 125, an indication that an address from the free address list is in use. In some embodiments, the host network driver 160 may add the in-use address to an address tracker store 180.

At operation 362, the host network driver 160 may receive, e.g., from an external network 110, a packet (e.g., a transmission 190) directed to an address 195 that is being monitored by the host network driver 160. At operation 365, the host network driver 160 may determine whether the address 195 is still in use by the guest VM 125. For example, the host network driver 160 may refer to the address tracker store 180 to determine that the address 195 to which the packet is directed has been allocated to the guest VM 125.

Responsive to determining that the address 195 is still in use, the host network driver 160 may forward the packet (e.g., the contents of transmission 190) to the guest VM 125 at operation 375. In some embodiments, forwarding the packet may be accomplished by providing the packet via virtual network interface 156. Responsive to determining that the address 195 is not in use, the host network driver 160 may discard the packet at operation 375.

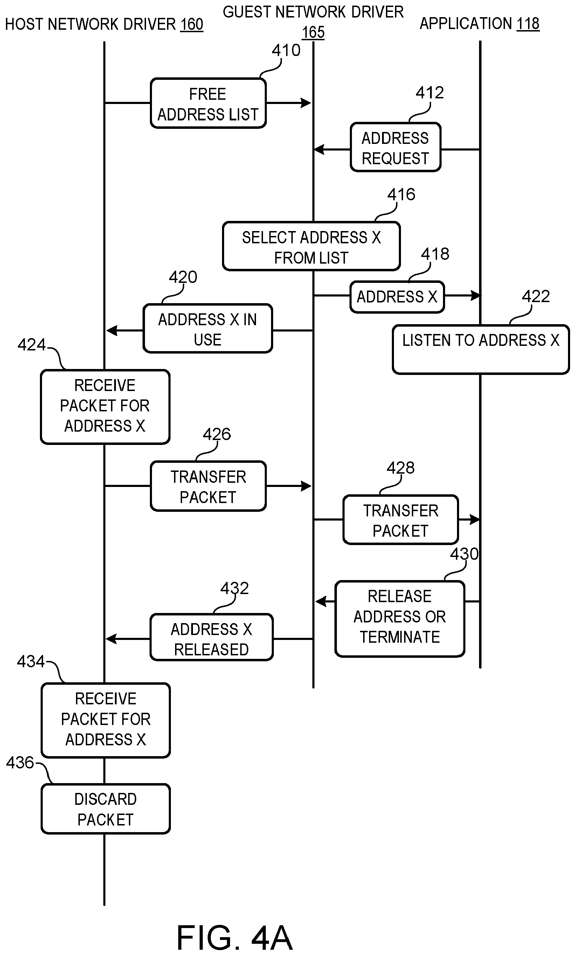

Though FIG. 3A and 3B describe an embodiment in which the allocation of an address 195 is performed responsive to a request from the guest network driver 165, the embodiments of the present disclosure are not limited to such embodiments. In some embodiments, the host network driver 160 may preemptively transmit an address list to the guest network driver 165 for allocation. FIG. 4A is a flow diagram illustrating communications between a host network driver 160, a guest network driver 165, and an application 118, in accordance with some embodiments of the present disclosure. A description of elements of FIG. 4A that have been previously described will be omitted for brevity. The operations of FIG. 4A may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the operations of FIG. 4A may be performed by a computing device (e.g., computing device 120 illustrated in FIG. 1).

Referring to FIG. 4A, at operation 410, the host network driver 160 may transmit a free address list to the guest network driver 165. The free address list may be a list containing one or more addresses 195 that are available to the guest network driver 165. The address 195 may be an IP address and/or a port number. The free address list may represent addresses 195 that have not yet been allocated by the host network driver 160. In some embodiments, the free address list may be transmitted to the guest network driver 165 responsive to detecting an instantiation of the guest VM 125 and/or an initialization of the guest network driver 165.

At a subsequent point, application 118 may request 412 an address 195 from the guest network driver 165. In some embodiments, the application 118 may be a network configuration application and/or a server application.

From this point forward, the operations of the elements of FIG. 4A may be similar to those described herein with respect to FIG. 3A. For example, at operation 416, the guest network driver 165 may select an address 195 from the list provided by the host network driver 160. In the example of FIG. 4A, the address 195 that is selected is address 'X'. After selecting 416 the address 195, the guest network driver 165 may provide 418 the address 195 to the application 118. In some embodiments, the guest network driver 165 may configure the virtual network interface 156 with the address 195. In addition, the guest network driver 165 may indicate 420 to the host network driver 160 that the address 195 is in use. In some embodiments, in response to detecting that the address 195 is in use, the host network driver 160 may begin monitoring for transmissions 190 associated with the address 195 (e.g., address X).

The host network driver 160 may receive 424 a packet (e.g., from external network 110). As part of operation 424, the host network driver 160 may determine that the packet is allocated to the guest network driver 165. Responsive to determining that the address 195 is in use by the guest network driver 165, the host network driver 160 may transfer 426 the packet to the guest network driver 165 (e.g., via the virtual network interface 156). The guest network driver 165 may process the packet directed to the address 195, which may include transferring 428 the packet to the application 118.

At a subsequent point, the application 118 may release the address 195 and/or may terminate at operation 430. The guest network driver 165 may detect the release of the address 195 and/or termination of the application 118, and may transmit 432 an indication to the host network driver 160 that the address 195 is released.

Subsequent to the release of the address 195, the host network driver 160 may receive 434, a packet directed to the previously allocated address 195 ('X' in the example of FIG. 4A). The host network driver 160 may determine that the address 195 is no longer allocated (e.g., to the guest network driver 165). Responsive to determining that the address 195 is no longer allocated, the host network driver 160 may discard 436 the packet.

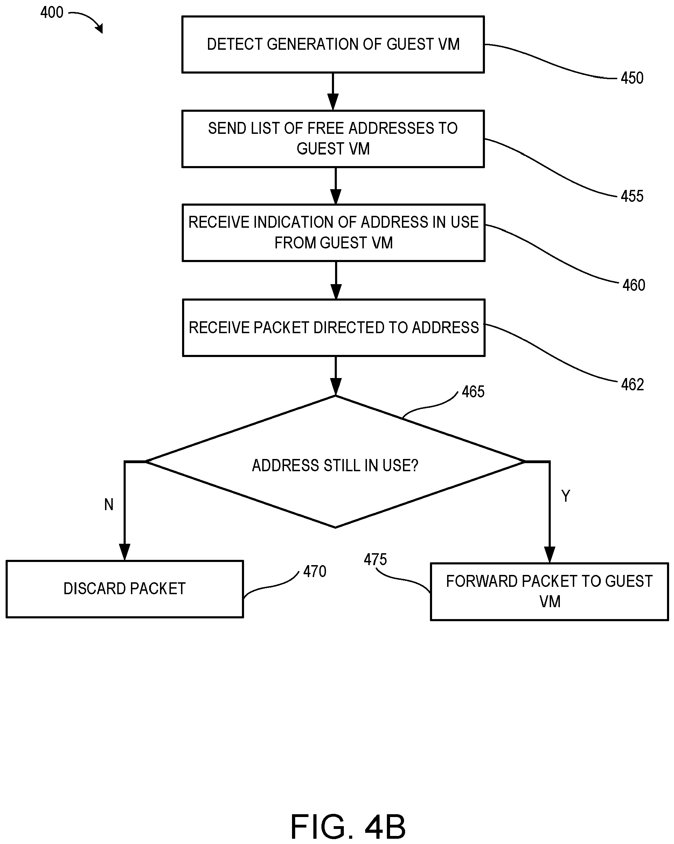

FIG. 4B is a flow diagram illustrating a method 400 of operating the host network driver 160 of FIG. 4A, in accordance with some embodiments of the present disclosure. A description of elements of FIG. 4B that have been previously described will be omitted for brevity. Method 400 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 400 may be performed by computing device 120 of at least FIG. 1.

With reference to FIG. 4B, method 400 illustrates example functions used by various embodiments. Although specific function blocks ("blocks") are disclosed in method 400, such blocks are examples. That is, embodiments are well suited to performing various other blocks or variations of the blocks recited in method 400. It is appreciated that the blocks in method 400 may be performed in an order different than presented, and that not all of the blocks in method 400 may be performed.

Referring to FIGS. 1 and 4B, at operation 450 the host network driver 160 may detect the generation of the guest VM 125. For example, the host network driver 160 may detect the instantiation of the guest VM 125 and/or an initialization of the guest network driver 165.

In response detecting the instantiation of the guest VM 125 and/or the guest network driver 165, at operation 455, the host network driver 160 may transmit a list of free addresses to the guest VM 125. The free address list may be a list containing one or more addresses 195 that are available to the guest network driver 165. The address 195 may be an IP address and/or a port number. The free address list may represent addresses 195 that have not yet been allocated by the host network driver 160.

At operation 460, the host network driver 160 may receive, from the guest VM 125, an indication that an address from the free address list is in use. In some embodiments, the host network driver 160 may add the in-use address to an address tracker store 180.

At operation 462, the host network driver 160 may receive, e.g., from an external network 110, a packet (e.g., a transmission 190) directed to an address 195 that is being monitored by the host network driver 160. At operation 465, the host network driver 160 may determine whether the address 195 is still in use by the guest VM 125. For example, the host network driver 160 may refer to the address tracker store 180 to determine that the address 195 to which the packet is directed has been allocated to the guest VM 125.

Responsive to determining that the address 195 is still in use, the host network driver 160 may forward the packet (e.g., the contents of transmission 190) to the guest VM 125 at operation 475 (e.g., utilizing the virtual network interface 156). Responsive to determining that the address 195 is not in use, the host network driver 160 may discard the packet at operation 475.

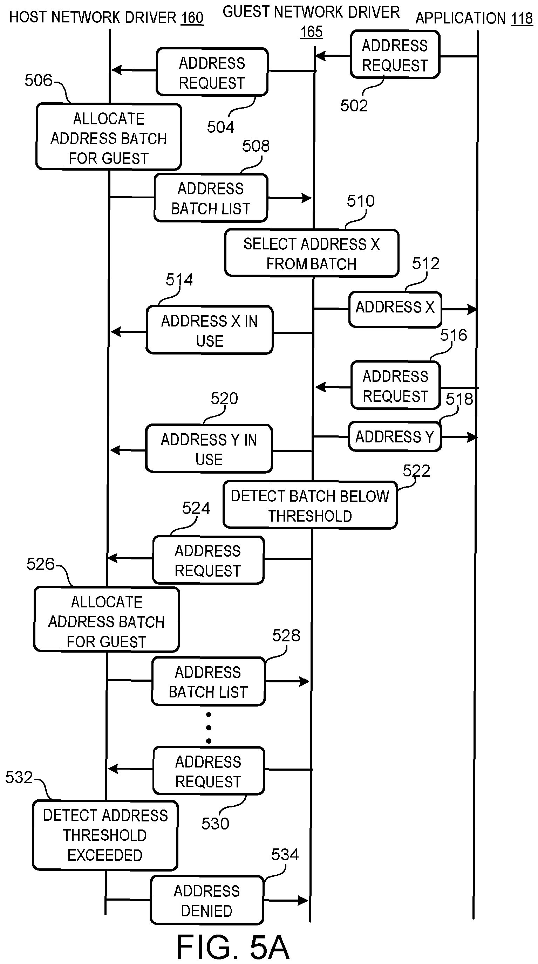

In some embodiments, additional improvements may be made to the previously described operations to increase an efficiency of the network address allocation and reservation. For example, in some embodiments, the addresses 195 may be allocated in batches. FIG. 5A is a flow diagram illustrating communications between a host network driver 160, a guest network driver 165, and an application 118, in accordance with some embodiments of the present disclosure. A description of elements of FIG. 5A that have been previously described will be omitted for brevity. The operations of FIG. 5A may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the operations of FIG. 5A may be performed by a computing device (e.g., computing device 120 illustrated in FIG. 1).

Referring to FIGS. 1 and 5A, at operation 502, application 118 may request an address 195 from the guest network driver 165. In some embodiments, the application 118 may be a network configuration application and/or a server application.

At operation 504, the guest network driver 165 may request 312 an address from the host network driver 160. The request 504 may be similar to the address request 170 illustrated and described with respect to FIG. 1.

At operation 506, the host network driver 160 may allocate a batch of addresses 195 for the guest network driver 165. For example., the host network driver 160 may allocate a plurality of addresses 195. The allocated addresses 195 may be contiguous in some embodiments, but, in some embodiments, may also be non-contiguous. The size of the batch may include, as examples only, fifty addresses, one hundred addresses, or one thousand addresses. The addresses 195 may be IP addresses and/or port numbers. In some embodiments, once allocated for the guest network driver 165, the allocated addresses may be removed from allocation for other guest VMs 125 of the computing device 120.

At operation 508, the host network driver 160 may transmit the batch of allocated addresses 195 to the guest network driver 165. Though illustrated as being provided in response to an address request (operation 504), in some embodiments, the allocation of the batch of addresses 195 and the transmission of the batch of addresses to the guest network driver 165 may be performed responsive to detecting an instantiation of the guest VM 125 and/or an initialization of the guest network driver 165 without waiting for the request 504, as described herein with respect to FIGS. 4A and 4B.

For example, at operation 510, the guest network driver 165 may select an address 195 from the batch provided by the host network driver 160. In the example of FIG. 5A, the address 195 that is selected is address 'X'. After selecting 510 the address 195, the guest network driver 165 may provide 512 the address 195 to the application 118. In addition, the guest network driver 165 may indicate 514 to the host network driver 160 that the address 195 is in use. In some embodiments, in response to detecting that the address 195 is in use, the host network driver 160 may begin monitoring for transmissions 190 associated with the address 195 (e.g., address X) and providing those transmissions to the application 118, as described herein.

At operation 516, application 118 (or another application of the guest VM 125) may request an address 195 from the guest network driver 165. Responsive to the request 516, the guest network driver 165 may provide 518 an additional address 195 (illustrated as address 'Y' in the example of FIG. 5A) to the application 118 and/or utilizing the addresses 195 to configure the virtual network interface 156. Because the guest network driver 165 has been provided with a pre-allocated batch of addresses 195, the guest network driver 165 does not need to request additional addresses from the host network driver 160. After providing 518 the address 195 to the application 118, the guest network driver 165 may indicate 520 to the host network driver 160 that the address 195 is in use. In some embodiments, in response to detecting that the address 195 is in use, the host network driver 160 may begin monitoring for transmissions 190 associated with the address 195 (e.g., address Y) and transmitting those transmissions to the application 118, as described herein.

The guest network driver 165 may detect 522 that the number of unallocated addresses 195 in the batch of addresses 195 allocated to it have fallen below a threshold. For example, a threshold may be ten percent of the number of addresses 195 in the allocated batch. Responsive to detecting 522 that the number of allocated addresses 195 is running low, the guest network driver 165 may send 524 an address request to the host network driver 160 to request more addresses.

Responsive to detecting the request 524 for more addresses, the host network driver 160 may allocate 526 an additional batch of addresses 195 for the guest VM 125 and transmit 528 the allocated batch of addresses 195 to the guest network driver 165.

At a subsequent point, the guest network driver 165 may again detect that the number of unallocated addresses 195 in the batch of addresses 195 allocated to it have fallen below the threshold (e.g., through the use of additional addresses 195), and request 530 an additional batch of addresses 195. In this example, the host network driver 160 may detect that the number of addresses 195 allocated to the guest VM 125 has exceeded an address threshold

(e.g., 2000 addresses, 10,000 addresses). Responsive to detecting that the number of addresses 195 allocated to the guest VM 125 has exceeded an address threshold, the host network driver 160 may transmit 534 an indication to the guest network driver 165 that the address request is denied, and no further addresses 195 will be allocated for it. In some embodiments, the host network driver 160 may continue, however, to monitor for those addresses 195 that have already been allocated.

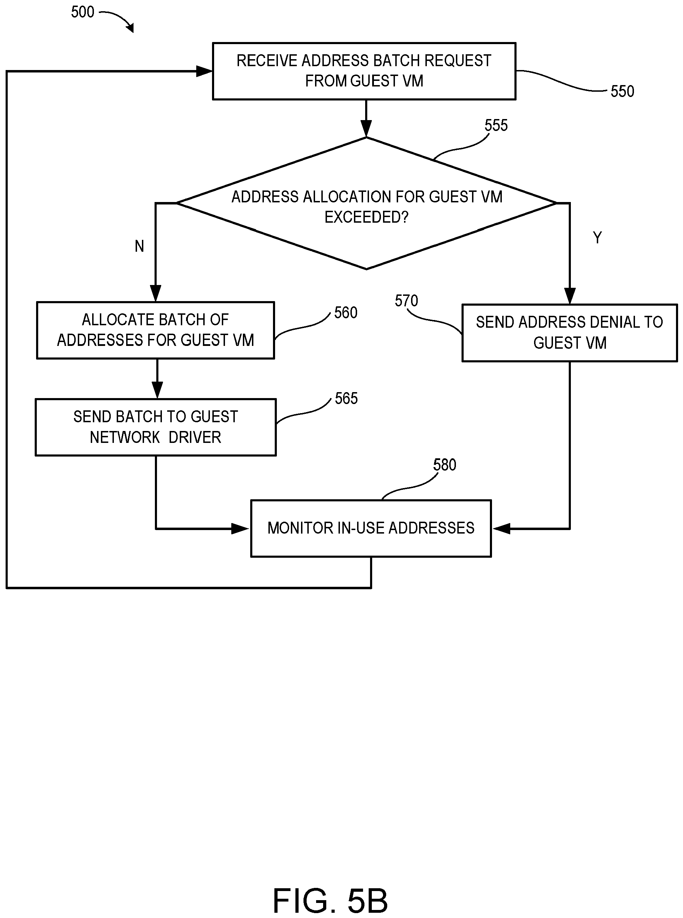

FIG. 5B is a flow diagram illustrating a method 500 of operating the host network driver 160 of FIG. 5A, in accordance with some embodiments of the present disclosure. A description of elements of FIG. 5B that have been previously described will be omitted for brevity. Method 500 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 500 may be performed by computing device 120 of at least FIG. 1.

With reference to FIG. 5B, method 500 illustrates example functions used by various embodiments. Although specific function blocks ("blocks") are disclosed in method 500, such blocks are examples. That is, embodiments are well suited to performing various other blocks or variations of the blocks recited in method 500. It is appreciated that the blocks in method 500 may be performed in an order different than presented, and that not all of the blocks in method 500 may be performed.

Referring to FIGS. 1 and 5B, at operation 550 an address batch request 504 may be received from a guest VM 125. For example, the address batch request 504 may be received from a guest network driver 165 of the guest VM 125. The address batch request 504 may be similar to the address request 504 described with respect to FIG. 5A.

In response to the address batch request 504, at operation 555, the host network driver 160 may determine whether the guest VM 125 has exceeded an address threshold for the number of allocated addresses.

If it is determined, at operation 555, that the number of allocated addresses for the guest VM 125 has not exceeded the address threshold (operation 555:N), the host network driver 160 may allocate a batch of addresses 195 for the guest VM 125. As previously described, the batch may be 10 or more, 50 or more, or 1000 or more addresses. In some embodiments, 1000 addresses 195 may be allocated per batch.

At operation 565, the host network driver 160 may send the batch of allocated addresses to the guest network driver 165. The host network driver 160 may then continue to monitor for transmissions for in-use addresses at operation 580, as described herein.

If it is determined, at operation 555, that the number of allocated addresses for the guest VM 125 exceeds the address threshold (operation 555:Y), the host network driver 160 may send an address denial 534 to the guest network driver 165. The host network driver 160 may then continue to monitor for transmissions for in-use addresses at operation 580, as described herein.

While monitoring for the in-use addresses (operation 580), the host network driver 160 may continue to receive address batch requests from the guest VM 125, and may then revert to operation 500.

The operations of FIGS. 5A and 5B provide an additional improvement over the prior embodiments. By using batches of addresses 195, a number of requests between the guest network driver 165 and the host network driver 160 may be reduced. The use of the batch of addresses 195 may allow the guest network driver 165 to respond more quickly to requests from application 118, and may increase a performance of the system 100 illustrated in FIG. 1.

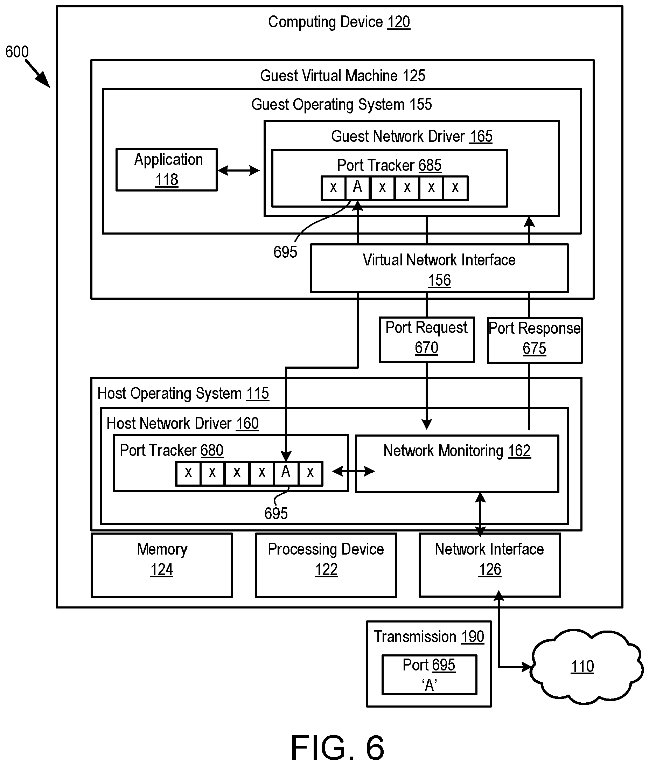

In some embodiments, as described herein, the addresses that are allocated and tracked by the host network driver 160 may be ports and/or port numbers. FIG. 6 is a schematic block diagram that illustrates an example system 600, according to some embodiments of the present disclosure. A description of elements of FIG. 6 that have been previously described will be omitted for brevity.

In the system 600 of FIG. 6, the addresses 195 of FIG. 1 are specified as ports 695. Stated another way, in the system 600, ports 695 are allocated by the host network driver 160 and tracked for incoming transmissions 190. The system 600 of FIG. 6 may allow for an application 118 of the guest VM 125 to utilize a particular port 695 (e.g., a particular port number) and have that same port 695 (e.g., the same port number) be exposed by the host operating system 115.

In the system 600 of FIG. 6, the application 118 requests a port 695 from the guest network driver 165, and the guest network driver 165 may transmit a port request 670 to the host network driver 160. Responsive to the port request 670, the host network driver 160 may allocate a port 695 to the guest VM 125 and may store the allocated port 695 in a port tracker 680.

The host network driver 160 may transmit the allocated port 695 to the guest network driver 165 via a port response 675. The guest network driver 165 may store the allocated port 695, in some embodiments, in its own port tracker 685. The allocated port 695 may be provided to the application 118 by the guest network driver 165 for its use. In some embodiments, the application 118 may then listen on the allocated port 695 for transmissions 190.

Responsive to receiving a transmission 190 for a particular port 695, the host network driver 160 may consult its port tracker 680 to determine if the port 695 to which the transmission 190 is directed is associated with one or more guest VMs 125. Responsive to determining that the port 695 to which the transmission 190 is directed has been allocated to the guest VM 125, the host network driver 160 may provide the transmission 190 to the guest network driver 165 for further processing (e.g., via the virtual network interface 156). Responsive to determining that the port 695 to which the transmission 190 is directed has not been allocated to the guest VM 125, the host network driver 160 may discard the transmission 190.

The system 600 may be further modified as described herein with respect to FIGS. 3A to 5B. For example, in some embodiments, the host network driver 160 may preemptively provide a list of free ports 695 to the guest network driver 165 without waiting for a port request 670. In some embodiments, the host network driver 160 may be configured to allocate the ports 695 in batches, and may provide the batches to the guest network driver 165 until a threshold of allocated ports 695 is met.

The system 600 may provide a specialized benefit in the realm of ports. In some embodiments, network security is port-based, and it may be useful to know if a particular port is being utilized by an application. For example, it may be useful to allow certain transmissions for a particular port through a security firewall if being used by an application. In a VM-based environment, it may be difficult for an application in a conventional system to know which port is being allocated within the external network (e.g., network 110 of FIGS. 1 and 6) since that allocation may be hidden from the VM. Embodiments of the present disclosure may provide a direct mapping between the port being utilized by an application and the port that is exposed external to the computing system, which may make configuration and operation of the system 600 superior to conventional techniques.

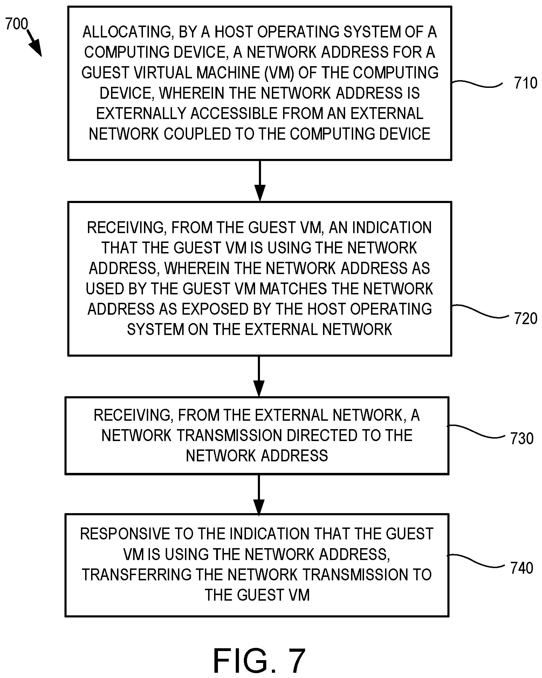

FIG. 7 is a flow diagram of a method 700 for performing cooperative networking between a host and a guest in a computing device, according to some embodiments of the present disclosure. Method 700 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the method 700 may be performed by a computing device (e.g., computing device 120 illustrated in FIGS. 1 to 6).

With reference to FIG. 7, method 700 illustrates example functions used by various embodiments. Although specific function blocks ("blocks") are disclosed in method 700, such blocks are examples. That is, embodiments are well suited to performing various other blocks or variations of the blocks recited in method 700. It is appreciated that the blocks in method 700 may be performed in an order different than presented, and that not all of the blocks in method 700 may be performed.

Referring simultaneously to FIGS. 1 to 6 as well, the method 700 begins at block 710, in which a host operating system of a computing device allocates a network address for a guest virtual machine (VM) of the computing device. The network address is externally accessible from an external network coupled to the computing device. In some embodiments, the network address may correspond to the network address 195, 695 as described herein with respect to FIGS. 1 to 6. In some embodiments, the host operating system may correspond to the host OS 115 as described herein with respect to FIGS. 1 to 6. For example, the host network driver 160 of the host OS 115 may allocate the network address 195, 695. In some embodiments, the computing device and the external network may correspond to the computing device 120 and the network 110, respectively, as described herein with respect to FIGS. 1 to 6. In some embodiments, the guest VM may correspond to the guest VM 125 as described herein with respect to FIGS. 1 to 6. In some embodiments, method 700 includes sending, by the host operating system, a list of a plurality of free addresses to the guest VM. The list of the plurality of free addresses may include the network address.

In some embodiments, the method 700 includes allocating, by the host operating system, a plurality of network addresses to the guest VM, the plurality of network addresses comprising the network address, each of the plurality of network addresses configured to be externally accessible from an external network coupled to the computing device, and sending, by the host operating system, the plurality of network addresses to the guest VM. The plurality of network address may correspond to the address batch described herein with respect to FIGS. 5A and 5B.

In some embodiments, the plurality of network addresses is a first plurality of network addresses. The method 700 may further include receiving a request from the guest VM for additional network addresses, allocating, by the host operating system, a second plurality of network addresses to the guest VM, each of the second plurality of network addresses configured to be externally accessible from an external network coupled to the computing device, and sending, by the host operating system, the second plurality of network addresses to the guest VM.

In some embodiments, the method 700 may further include, in response to receiving the request from the guest VM for the additional network addresses, comparing a number of network addresses allocated to the guest VM to an address threshold. The allocating, by the host operating system, the second plurality of network addresses to the guest VM may be performed in response to determining that the number of network addresses allocated to the guest VM does not exceed the address threshold.

At block 720, an indication that the guest VM is using the network address is received from the guest VM. The network address as used by the guest VM matches the network address as exposed by the host operating system on the external network. In some embodiments, the indication may correspond to the in use message 320, 420, 514, 520 as described herein with respect to FIGS. 3A to 5B. In some embodiments, the network address comprises a port number, and the port number as utilized by the guest VM matches the port number as exposed by the host operating system on the external network.

At block 730, a network transmission directed to the network address is received from the external network. In some embodiments, the network transmission may correspond to the transmission 190 as described herein with respect to FIGS. 1 to 6.

At block 740, responsive to the indication that the guest VM is using the network address, the network transmission is transferred to the guest VM. In some embodiments, the network transmission may be transferred as part of a virtual network interface, such as virtual network interface 156, described herein with respect to FIGS. 1 to 6.

In some embodiments, the network transmission is a first network transmission, and the method 700 further includes receiving an indication that the guest VM is no longer utilizing the network address, receiving, from the external network, a second network transmission directed to the network address, and responsive to the indication that the guest VM is no longer utilizing the network address, discarding the second network transmission.

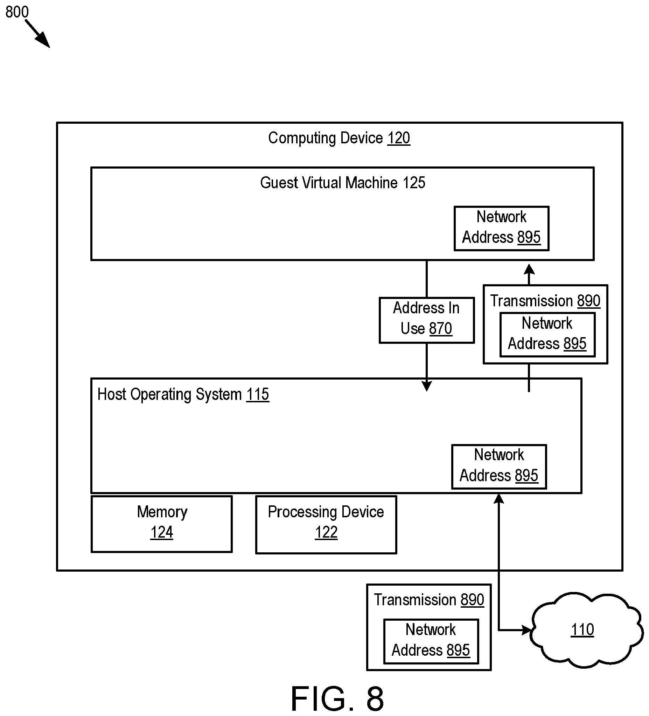

FIG. 8 is a component diagram of an example of a device architecture 800, according to some embodiments of the disclosure. The device architecture 800 includes computing device 120 having processing device 122 and memory 124, as described herein with respect to FIGS. 1 to 7.

A host operating system 115 of the computing device 120 may allocate a network address 895 for a guest VM 125 of the computing device 120. The network address 895 may be externally accessible from an external network 110 coupled to the computing device 120. In some embodiments, allocating the network address 895 may include allocation a plurality of network addresses 895 to the guest VM 125 and sending the plurality of network addresses 895 to the guest VM 125.

The host operating system 115 may receive, from the guest VM 125, an indication 870 that the guest VM 125 is using the network address 895. The network address 895 as used by the guest VM 125 matches the network address 895 as exposed by the host operating system 115 on the external network 110. In some embodiments, the network address 895 includes a port number, and the port number as utilized by the guest VM 125 matches the port number as exposed by the host operating system 115 on the external network 110.

The computing device 120 may receive, from the external network 110, a network transmission 890 directed to the network address 895. Responsive to the indication 870 that the guest VM 125 is using the network address 895, the computing device 120 may transfer the network transmission 890 to the guest VM 125.

The device architecture 800 of FIG. 8 provides a technological capability to dynamically allocate network addresses to a guest VM that are visible on an external network 110 such that the address (e.g., the numeric value(s) of the address) as used by the guest VM match the externally-visible address. By utilizing the same address within the guest VM as used externally, applications of the guest VM may be able to better configure networking communications and/or security. By managing the allocation from the host OS, the host OS may maintain control of the transmissions, and may continue, for example, to filter traffic and/or examine packets provided to the guest OS. In this way, security may be maintained for the guest VM while still allowing the guest VM flexibility in its operation.

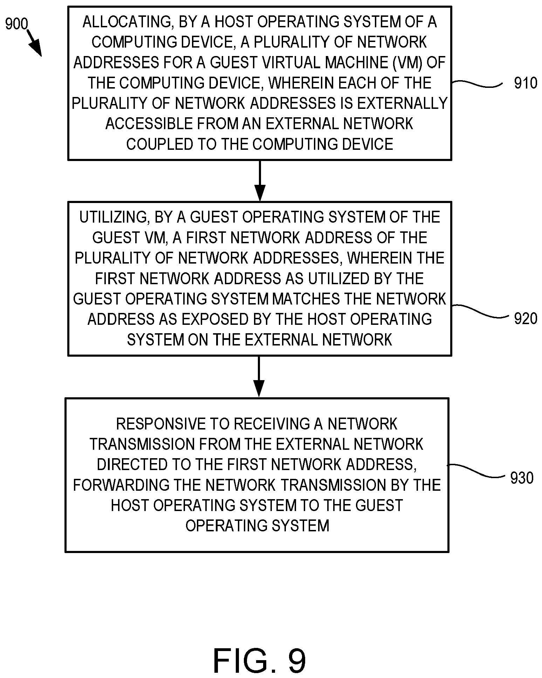

FIG. 9 is a flow diagram of a method 900 for performing cooperative networking between a host and a guest in a computing device, according to some embodiments of the present disclosure. Method 900 may be performed by processing logic that may comprise hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, the method 900 may be performed by a computing device (e.g., computing device 120 illustrated in FIGS. 1 to 8).

With reference to FIG. 9, method 900 illustrates example functions used by various embodiments. Although specific function blocks ("blocks") are disclosed in method 900, such blocks are examples. That is, embodiments are well suited to performing various other blocks or variations of the blocks recited in method 900. It is appreciated that the blocks in method 900 may be performed in an order different than presented, and that not all of the blocks in method 900 may be performed.

Referring simultaneously to FIGS. 1 to 8 as well, the method 900 begins at block 910, in which a host operating system of a computing device allocates a plurality of network addresses for a guest VM of the computing device. Each of the plurality of network addresses may be externally accessible from an external network coupled to the computing device. In some embodiments, the host operating system may correspond to the host OS 115 as described herein with respect to FIGS. 1 to 6. In some embodiments, the computing device and the external network may correspond to the computing device 120 and the network 110, respectively, as described herein with respect to FIGS. 1 to 6. In some embodiments, the guest VM may correspond to the guest VM 125 as described herein with respect to FIGS. 1 to 6. In some embodiments, the network address may correspond to the network address 195 as described herein with respect to FIGS. 1 to 6. In some embodiments, the method 900 further includes sending, by the host operating system, the plurality of network addresses to the guest VM. In some embodiments, the guest VM comprises a software container configured to execute an application that utilizes the network address. The software container may be similar to the container 210 described herein with respect to FIG. 2B.

At block 920, a guest operating system of the guest VM utilizes a first network address of the plurality of network addresses. The first network address as utilized by the guest operating system matches the network address as exposed by the host operating system on the external network. In some embodiments, the guest operating system may correspond to the guest operating system 155 as described herein with respect to FIGS. 1 to 6. In some embodiments, the network address comprises a port number, and the port number as utilized by the guest operating system matches the port number as exposed by the host operating system on the external network.

At block 930, responsive to receiving a network transmission from the external network directed to the first network address, the network transmission is forwarded by the host operating system to the guest operating system. In some embodiments, the network transmission may correspond to the transmission 190 as described herein with respect to FIGS. 1 to 6.

In some embodiments, the plurality of network addresses is a first plurality of network addresses, and the method 900 further includes determining, by the guest operating system, that a number of unutilized network addresses from the plurality of network addresses is less than a threshold and transmitting, by the guest operating system, a request to the host operating system for a second plurality of network addresses.

In some embodiments, the method 900 further includes detecting, by the guest operating system, that the first network address is utilized by an application of the guest VM and transmitting, by the guest operating system to the host operating system, an indication that the network address is being utilized. In some embodiments, the method 900 further includes detecting, by the guest operating system, that the network address is no longer utilized by the application of the guest VM and transmitting, by the guest operating system is to the host operating system, an indication that the network address is no longer in-use.

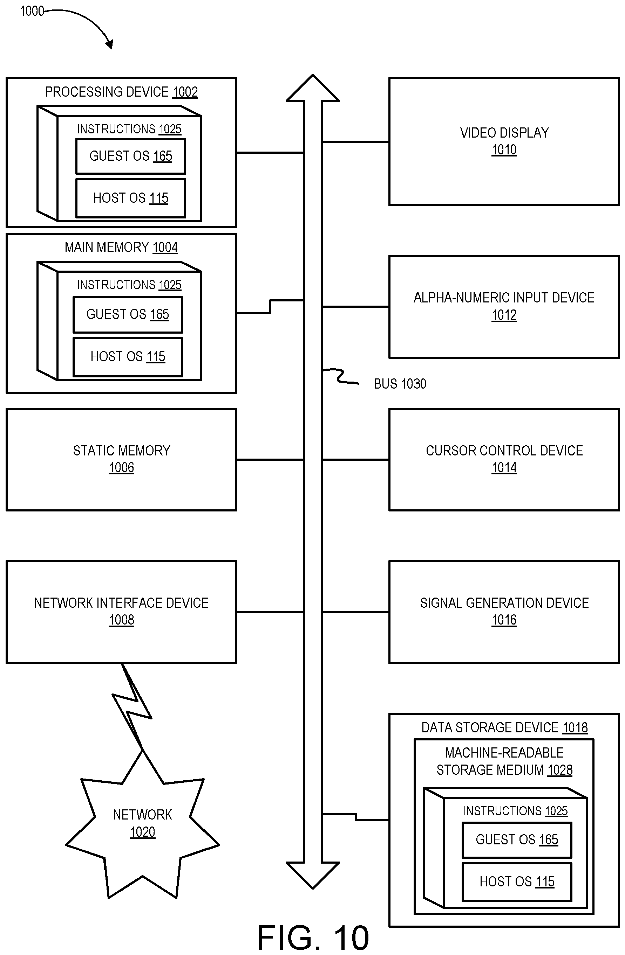

FIG. 10 is a block diagram of an example computing device 1000 that may perform one or more of the operations described herein, in accordance with some embodiments of the disclosure. Computing device 1000 may be connected to other computing devices in a LAN, an intranet, an extranet, and/or the Internet. The computing device may operate in the capacity of a server machine in client-server network environment or in the capacity of a client in a peer-to-peer network environment. The computing device may be provided by a personal computer (PC), a set-top box (STB), a server, a network router, switch or bridge, or any machine capable of executing a set of instructions (sequential or otherwise) that specify actions to be taken by that machine. Further, while only a single computing device is illustrated, the term "computing device" shall also be taken to include any collection of computing devices that individually or jointly execute a set (or multiple sets) of instructions to perform the methods discussed herein.

The example computing device 1000 may include a processing device (e.g., a general purpose processor, a PLD, etc.) 1002, a main memory 1004 (e.g., synchronous dynamic random access memory (DRAM), read-only memory (ROM)), a static memory 1006 (e.g., flash memory and a data storage device 1018), which may communicate with each other via a bus 1030.

Processing device 1002 may be provided by one or more general-purpose processing devices such as a microprocessor, central processing unit, or the like. In an illustrative example, processing device 1002 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 1002 may also include one or more special-purpose processing devices such as an application specific integrated circuit (ASIC), a field programmable gate array (FPGA), a digital signal processor (DSP), network processor, or the like. The processing device 1002 may execute the operations described herein, in accordance with one or more aspects of the present disclosure, for performing the operations and steps discussed herein.

Computing device 1000 may further include a network interface device 1008 which may communicate with a network 1020. The computing device 1000 also may include a video display unit 1010 (e.g., a liquid crystal display (LCD) or a cathode ray tube (CRT)), an alphanumeric input device 1012 (e.g., a keyboard), a cursor control device 1014 (e.g., a mouse) and an acoustic signal generation device 1016 (e.g., a speaker). In one embodiment, video display unit 1010, alphanumeric input device 1012, and cursor control device 1014 may be combined into a single component or device (e.g., an LCD touch screen).

Data storage device 1018 may include a computer-readable storage medium 1028 on which may be stored one or more sets of instructions 1025 that may include instructions for a component (e.g., guest OS 155 and/or host OS 115 discussed herein) for carrying out the operations described herein, in accordance with one or more aspects of the present disclosure. Instructions 1025 may also reside, completely or at least partially, within main memory 1004 and/or within processing device 1002 during execution thereof by computing device 1000, main memory 1004 and processing device 1002 also constituting computer-readable media. The instructions 1025 may further be transmitted or received over a network 1020 via network interface device 1008.

While computer-readable storage medium 1028 is shown in an illustrative example to be a single medium, the term "computer-readable storage medium" should be taken to include a single medium or multiple media (e.g., a centralized or distributed database and/or associated caches and servers) that store the one or more sets of instructions. The term "computer-readable storage medium" shall also be taken to include any medium that is capable of storing, encoding, or carrying a set of instructions for execution by the machine and that cause the machine to perform the methods described herein. The term "computer-readable storage medium" shall accordingly be taken to include, but not be limited to, solid-state memories, optical media, and magnetic media.

Example 1 is a method comprising: allocating, by a host operating system of a computing device, a network address for a guest virtual machine (VM) of the computing device, wherein the network address is externally accessible from an external network coupled to the computing device; receiving, from the guest VM, an indication that the guest VM is using the network address, wherein the network address as used by the guest VM matches the network address as exposed by the host operating system on the external network; receiving, from the external network, a network transmission directed to the network address; and responsive to the indication that the guest VM is using the network address, transferring, by a processing device, the network transmission to the guest VM.

Example 2 is the method of Example 1, further comprising sending, by the host operating system, a list of a plurality of free addresses to the guest VM, the list of the plurality of free addresses comprising the network address.

Example 3 is the method of any of Examples 1-2, wherein the network transmission is a first network transmission, and wherein the method further comprises: receiving an indication that the guest VM is no longer utilizing the network address; receiving, from the external network, a second network transmission directed to the network address; and responsive to the indication that the guest VM is no longer utilizing the network address, discarding the second network transmission.

Example 4 is the method of any of Examples 1-3, further comprising allocating, by the host operating system, a plurality of network addresses to the guest VM, the plurality of network addresses comprising the network address, each of the plurality of network addresses configured to be externally accessible from an external network coupled to the computing device; and sending, by the host operating system, the plurality of network addresses to the guest VM.

Example 5 is the method of any of Examples 1-4, wherein the plurality of network addresses is a first plurality of network addresses, and wherein the method further comprises: receiving a request from the guest VM for additional network addresses; allocating, by the host operating system, a second plurality of network addresses to the guest VM, each of the second plurality of network addresses configured to be externally accessible from an external network coupled to the computing device; and sending, by the host operating system, the second plurality of network addresses to the guest VM.

Example 6 is the method of any of Examples 1-5, further comprising, in response to receiving the request from the guest VM for the additional network addresses, comparing a number of network addresses allocated to the guest VM to an address threshold, wherein the allocating, by the host operating system, the second plurality of network addresses to the guest VM is performed in response to determining that the number of network addresses allocated to the guest VM does not exceed the address threshold.

Example 7 is the method of any of Examples 1-6, wherein the network address comprises a port number, and wherein the port number as utilized by the guest VM matches the port number as exposed by the host operating system on the external network.

Example 8 is the method of any of Examples 1-7, wherein the guest VM comprises a software container configured to execute an application that utilizes the network address.

Example 9 is a system comprising: a memory; and a processing device operatively coupled to the memory, to: allocate, by a host operating system of a computing device, a network address for a guest virtual machine (VM) of the computing device, wherein the network address is externally accessible from an external network coupled to the computing device; receive, from the guest VM, an indication that the guest VM is using the network address, wherein the network address as used by the guest VM matches the network address as exposed by the host operating system on the external network; receive, from the external network, a network transmission directed to the network address; and, responsive to the indication that the guest VM is using the network address, transfer the network transmission to the guest VM.

Example 10 is the system of Example 9, wherein the processing device is further to: send, by the host operating system, a list of a plurality of free addresses to the guest VM, the list of the plurality of free addresses comprising the network address.

Example 11 is the system of any of Examples 9-10, wherein the network transmission is a first network transmission, and wherein the processing device is further to: receive an indication that the guest VM is no longer utilizing the network address; receive, from the external network, a second network transmission directed to the network address; and, responsive to the indication that the guest VM is no longer utilizing the network address, discard the second network transmission.

Example 12 is the system of any of Examples 9-11, wherein the processing device is further to: allocate, by the host operating system, a plurality of network addresses to the guest VM, the plurality of network addresses comprising the network address, each of the plurality of network addresses configured to be externally accessible from an external network coupled to the computing device; and send, by the host operating system, the plurality of network addresses to the guest VM.

Example 13 is the system of any of Examples 9-12, wherein the plurality of network addresses is a first plurality of network addresses, and wherein the processing device is further to: receive a request from the guest VM for additional network addresses; allocate, by the host operating system, a second plurality of network addresses to the guest VM, each of the second plurality of network addresses configured to be externally accessible from an external network coupled to the computing device; and send, by the host operating system, the second plurality of network addresses to the guest VM.

Example 14 is the system of any of Examples 9-13, wherein the processing device is further to: in response to receiving the request from the guest VM for the additional network addresses, compare a number of network addresses allocated to the guest VM to an address threshold, wherein the processing device is to allocate, by the host operating system, the second plurality of network addresses to the guest VM in response to determining that the number of network addresses allocated to the guest VM does not exceed the address threshold.

Example 15 is the system of any of Examples 9-14, wherein the network address comprises a port number, and wherein the port number as utilized by the guest VM matches the port number as exposed by the host operating system on the external network.

Example 16 is a non-transitory computer-readable storage medium including instructions that, when executed by a processing device, cause the processing device to: allocate, by a host operating system of a computing device, a network address for a guest virtual machine (VM) of the computing device, wherein the network address is externally accessible from an external network coupled to the computing device; receive, from the guest VM, an indication that the guest VM is using the network address, wherein the network address as used by the guest VM matches the network address as exposed by the host operating system on the external network; receive, from the external network, a network transmission directed to the network address; and responsive to the indication that the guest VM is using the network address, transfer, by the processing device, the network transmission to the guest VM.

Example 17 is the non-transitory computer-readable storage medium of Example 16, wherein the processing device is further to: send, by the host operating system, a list of a plurality of free addresses to the guest VM, the list of the plurality of free addresses comprising the network address.

Example 18 is the non-transitory computer-readable storage medium of any of Examples 16-17, wherein the network transmission is a first network transmission, and wherein the processing device is further to: receive an indication that the guest VM is no longer utilizing the network address; receive, from the external network, a second network transmission directed to the network address; and responsive to the indication that the guest VM is no longer utilizing the network address, discard the second network transmission.

Example 19 is the non-transitory computer-readable storage medium of any of Examples 16-18, wherein the processing device is further to: allocate, by the host operating system, a plurality of network addresses to the guest VM, the plurality of network addresses comprising the network address, each of the plurality of network addresses configured to be externally accessible from an external network coupled to the computing device; and send, by the host operating system, the plurality of network addresses to the guest VM.

Example 20 is the non-transitory computer-readable storage medium of any of Examples 16-19, wherein the plurality of network addresses is a first plurality of network addresses, and wherein the processing device is further to: receive a request from the guest VM for additional network addresses; allocate, by the host operating system, a second plurality of network addresses to the guest VM, each of the second plurality of network addresses configured to be externally accessible from an external network coupled to the computing device; and send, by the host operating system, the second plurality of network addresses to the guest VM

Example 21 is the non-transitory computer-readable storage medium of any of Examples 16-20, wherein the processing device is further to: in response to receiving the request from the guest VM for the additional network addresses, compare a number of network addresses allocated to the guest VM to an address threshold, wherein the processing device is to allocate, by the host operating system, the second plurality of network addresses to the guest VM in response to determining that the number of network addresses allocated to the guest VM does not exceed the address threshold.

Example 22 is the non-transitory computer-readable storage medium of any of Examples 16-21, wherein the network address comprises a port number, and wherein the port number as utilized by the guest VM matches the port number as exposed by the host operating system on the external network.

Example 23 is an apparatus comprising: means to allocate, by a host operating system of a computing device, a network address for a guest virtual machine (VM) of the computing device, wherein the network address is externally accessible from an external network coupled to the computing device; means to receive, from the guest VM, an indication that the guest VM is using the network address, wherein the network address as used by the guest VM matches the network address as exposed by the host operating system on the external network; means to receive, from the external network, a network transmission directed to the network address; and, means to transfer, responsive to the indication that the guest VM is using the network address, the network transmission to the guest VM.

Example 24 is the apparatus of Example 23, further comprising: means to send, by the host operating system, a list of a plurality of free addresses to the guest VM, the list of the plurality of free addresses comprising the network address.

Example 25 is the apparatus of any of Examples 23-24, wherein the network transmission is a first network transmission, and wherein the apparatus further comprises: means to receive an indication that the guest VM is no longer utilizing the network address; receive, from the external network, a second network transmission directed to the network address; and, means to discard, responsive to the indication that the guest VM is no longer utilizing the network address, the second network transmission.

Example 26 is the apparatus of any of Examples 23-25, further comprising: means to allocate, by the host operating system, a plurality of network addresses to the guest VM, the plurality of network addresses comprising the network address, each of the plurality of network addresses configured to be externally accessible from an external network coupled to the computing device; and means to send, by the host operating system, the plurality of network addresses to the guest VM.

Example 27 is the apparatus of any of Examples 23-26, wherein the plurality of network addresses is a first plurality of network addresses, and wherein the apparatus further comprises: means to receive a request from the guest VM for additional network addresses; means to allocate, by the host operating system, a second plurality of network addresses to the guest VM, each of the second plurality of network addresses configured to be externally accessible from an external network coupled to the computing device; and means to send, by the host operating system, the second plurality of network addresses to the guest VM.

Example 28 is the apparatus of any of Examples 23-27, further comprising: means to compare, in response to receiving the request from the guest VM for the additional network addresses, a number of network addresses allocated to the guest VM to an address threshold, wherein allocating, by the host operating system, the second plurality of network addresses to the guest VM is performed in response to determining that the number of network addresses allocated to the guest VM does not exceed the address threshold.

Example 29 is the apparatus of any of Examples 23-28, wherein the network address comprises a port number, and wherein the port number as utilized by the guest VM matches the port number as exposed by the host operating system on the external network.

Example 30 is a method comprising: allocating, by a host operating system of a computing device, a plurality of network addresses for a guest virtual machine (VM) of the computing device, each of the plurality of network addresses configured to be externally accessible from an external network coupled to the computing device; utilizing, by a guest operating system of the guest VM, a first network address of the plurality of network addresses, wherein the first network address as utilized by the guest operating system matches the network address as exposed by the host operating system on the external network; responsive to receiving a network transmission from the external network directed to the first network address, forwarding the network transmission by the host operating system to the guest operating system.

Example 31 is the method of Example 30, further comprising sending, by the host operating system, the plurality of network addresses to the guest VM.

Example 32 is the method of any of Examples 30-31, wherein the plurality of network addresses is a first plurality of network addresses, and wherein the method further comprises: determining, by the guest operating system, that a number of unutilized network addresses from the plurality of network addresses is less than a threshold; and sending, by the guest operating system, a request to the host operating system for a second plurality of network addresses.

Example 33 is the method of any of Examples 30-32, further comprising: detecting, by the guest operating system, that the first network address is utilized by an application of the guest VM; and sending, by the guest operating system to the host operating system, an indication that the network address is being utilized.

Example 34 is the method of any of Examples 30-33, further comprising: detecting, by the guest operating system, that the network address is no longer utilized by the application of the guest VM; and sending, by the guest operating system is to the host operating system, an indication that the network address is no longer being utilized.

Example 35 is the method of any of Examples 30-34, wherein the network address comprises a port number, and wherein the port number as utilized by the guest operating system matches the port number as exposed by the host operating system on the external network.

Example 36 is the method of any of Examples 30-35, wherein the guest VM comprises a software container configured to execute an application that utilizes the network address.

Unless specifically stated otherwise, terms such as "allocating," "receiving," "transferring," "sending," "discarding," "comparing," "utilizing," "forwarding," "determining," "detecting," "transmitting," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting. As used herein, the term "and/or" includes any and all combination of one or more of the associated listed items.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. 112, sixth paragraph, for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the invention is not to be limited to the details given herein, but may be modified within the scope and equivalents of the appended claims.

## Claims

1. A method comprising:
allocating, by a host operating system of a computing device, a network address for a guest virtual machine (VM) of the computing device, wherein the network address is externally accessible from an external network coupled to the computing device;
receiving, from the guest VM, an indication that the guest VM is using the network address, wherein the network address as used by the guest VM matches the network address as exposed by the host operating system on the external network;
receiving, from the external network, a network transmission directed to the network address; and
responsive to the indication that the guest VM is using the network address, transferring, by a processing device, the network transmission to the guest VM.

2. The method of claim 1, further comprising:
sending, by the host operating system, a list of a plurality of free addresses to the guest VM, the list of the plurality of free addresses comprising the network address.

3. The method of claim 1, wherein the network transmission is a first network transmission, and
wherein the method further comprises:
receiving an indication that the guest VM is no longer utilizing the network address;
receiving, from the external network, a second network transmission directed to the network address; and
responsive to the indication that the guest VM is no longer utilizing the network address, discarding, by the processing device, the second network transmission.

4. The method of claim 1, further comprising:
allocating, by the host operating system, a plurality of network addresses to the guest VM, the plurality of network addresses comprising the network address, each of the plurality of network addresses configured to be externally accessible from an external network coupled to the computing device; and
sending, by the host operating system, the plurality of network addresses to the guest VM.

5. The method of claim 4, wherein the plurality of network addresses is a first plurality of network addresses, and
wherein the method further comprises:
receiving a request from the guest VM for additional network addresses;
allocating, by the host operating system, a second plurality of network addresses to the guest VM, each of the second plurality of network addresses configured to be externally accessible from an external network coupled to the computing device; and
sending, by the host operating system, the second plurality of network addresses to the guest VM.

6. The method of claim 5, further comprising:
in response to receiving the request from the guest VM for the additional network addresses, comparing a number of network addresses allocated to the guest VM to an address threshold, wherein the allocating, by the host operating system, the second plurality of network addresses to the guest VM is performed in response to determining that the number of network addresses allocated to the guest VM does not exceed the address threshold.

7. The method of claim 1, wherein the network address comprises a port number, and wherein the port number as utilized by the guest VM matches the port number as exposed by the host operating system on the external network.

8. A system comprising:
a memory; and
a processing device, operatively coupled to the memory, to:
allocate, by a host operating system of a computing device, a network address for a guest virtual machine (VM) of the computing device, wherein the network address is externally accessible from an external network coupled to the computing device;
receive, from the guest VM, an indication that the guest VM is using the network address, wherein the network address as used by the guest VM matches the network address as exposed by the host operating system on the external network;
receive, from the external network, a network transmission directed to the network address; and
responsive to the indication that the guest VM is using the network address, transfer the network transmission to the guest VM.

9. The system of claim 8, wherein the processing device is further to:
send, by the host operating system, a list of a plurality of free addresses to the guest VM, the list of the plurality of free addresses comprising the network address.

10. The system of claim 8, wherein the network transmission is a first network transmission, and
wherein the processing device is further to:
receive an indication that the guest VM is no longer utilizing the network address;
receive, from the external network, a second network transmission directed to the network address; and
responsive to the indication that the guest VM is no longer utilizing the network address, discard the second network transmission.

11. The system of claim 8, wherein the processing device is further to:
allocate, by the host operating system, a plurality of network addresses to the guest VM, the plurality of network addresses comprising the network address, each of the plurality of network addresses configured to be externally accessible from an external network coupled to the computing device; and
send, by the host operating system, the plurality of network addresses to the guest VM.

12. The system of claim 11, wherein the plurality of network addresses is a first plurality of network addresses, and
wherein the processing device is further to:
receive a request from the guest VM for additional network addresses;
allocate, by the host operating system, a second plurality of network addresses to the guest VM, each of the second plurality of network addresses configured to be externally accessible from an external network coupled to the computing device; and
send, by the host operating system, the second plurality of network addresses to the guest VM.

13. The system of claim 12, wherein the processing device is further to:
in response to receiving the request from the guest VM for the additional network addresses, compare a number of network addresses allocated to the guest VM to an address threshold, wherein the processing device is to allocate, by the host operating system, the second plurality of network addresses to the guest VM in response to determining that the number of network addresses allocated to the guest VM does not exceed the address threshold.

14. The system of claim 8, wherein the network address comprises a port number, and wherein the port number as utilized by the guest VM matches the port number as exposed by the host operating system on the external network.

15. A non-transitory computer-readable storage medium including instructions that, when executed by a processing device, cause the processing device to operate as the processing device of any one of claims 8 to 14.
